# EUROPÄISCHE PATENTSCHRIFT

(11) **EP 3 530 549 B1**
(45) Veröffentlichungstag und Bekanntmachung des Hinweises auf die Patenterteilung: **09.08.2023**
(21) Anmeldenummer: 19153130.0
(22) Anmeldetag: 22.01.2019
(51) Int. Cl.: B62D 15/02, B60D 1/36, B60Q 9/00

(54) **VERFAHREN UND SYSTEM ZUM UNTERSTÜTZEN EINES ANKOPPELVORGANGS EINES KRAFTFAHRZEUGS AN EINEN ANHÄNGER**
METHOD AND SYSTEM FOR SUPPORTING A COUPLING PROCESS OF A MOTOR VEHICLE TO A TRAILER
PROCÉDÉ ET SYSTÈME D'AIDE À UN PROCESSUS DE COUPLAGE D'UN VÉHICULE AUTOMOBILE À UNE REMORQUE

(30) Priorität: 21.02.2018 DE 102018202613
(43) Veröffentlichungstag der Anmeldung: 28.08.2019
(73) Patentinhaber: VOLKSWAGEN AKTIENGESELLSCHAFT, 38440 Wolfsburg (DE)
(72) Erfinder: Ziebart, Sascha, 38104 Braunschweig (DE); Schwitters, Frank, Königislutter (DE); Knoppek, Chrystian, 12437 Berlin (DE); Gebert, Hermann, 10715 Berlin (DE); Michl, Benedikt, 13509 Berlin (DE)

(56) Entgegenhaltungen:
- EP-A1- 2 682 329
- WO-A1-2005/080100
- DE-A1-102005 052 238
- DE-A1-102009 030 452
- DE-A1-102009 045 284
- DE-A1-102010 004 920
- DE-A1-102014 110 498
- US-A1- 2011 205 088

## Beschreibung

Die Erfindung betrifft ein Verfahren und System zum Unterstützen eines Ankoppelvorgangs eines Kraftfahrzeugs an einen Anhänger der in den Oberbegriffen der unabhängigen Patentansprüche angegebenen Art. Des Weiteren betrifft die Erfindung noch ein Kraftfahrzeug mit einem derartigen System.

Verfahren und Systeme zum Unterstützen eines Ankoppelvorgangs eines Kraftfahrzeugs an einen Anhänger sind an sich schon bekannt. So beschreibt die DE 10 2009 045 284 A1 beispielsweise ein automatisiertes System zum Unterstützen eines Ankoppelvorgangs eines Kraftfahrzeugs an einen Anhänger. Das automatisierte System nimmt notwendige Lenkeingriffe zum Manövrieren des Kraftfahrzeugs an den Anhänger automatisch vor, wobei ein Fahrer lediglich die Aufgabe hat, die Längsführung des Kraftfahrzeugs zu übernehmen, das heißt, das Fahrzeug sinnvoll zu beschleunigen oder abzubremsen. Zudem kann der Abstand des Kraftfahrzeugs zum Anhänger optisch und akustisch dargestellt werden.

Weitere Verfahren und Systeme zum Unterstützen eines Ankoppelvorgangs eines Kraftfahrzeugs an einen Anhänger sind beispielsweise noch in der DE 10 2005 052 238 A1, DE 10 2009 030 452 A1, DE 10 2010 004 920 A1 sowie in der DE 10 2004 008 928 A1 gezeigt.

Es ist die Aufgabe der vorliegenden Erfindung, eine Lösung bereitzustellen, mittels welcher ein Benutzer besonders gut bei einem Ankoppelvorgang eines Kraftfahrzeugs an einen Anhänger unterstützt wird.

Diese Aufgabe wird durch ein Verfahren sowie durch ein System zum Unterstützen eines Ankoppelvorgangs eines Kraftfahrzeugs an einen Anhänger mit den Merkmalen der unabhängigen Patentansprüche gelöst. Vorteilhafte Ausgestaltungen mit zweckmäßigen und nicht-trivialen Weiterbildungen der Erfindung sind in den übrigen Ansprüchen angegeben.

Bei dem erfindungsgemäßen Verfahren zum Unterstützen eines Ankoppelvorgangs eines Kraftfahrzeugs an einen Anhänger wird mittels eines Anhängerankuppelassistenten eine Position eines anhängerseitigen Kupplungselements erkannt und basierend darauf das Kraftfahrzeug zumindest teilautonom in eine Zielposition manövriert, in welcher eine Anhängerkupplung des Kraftfahrzeugs in einer vorgegebenen Ankoppelstellung zum anhängerseitigen Kupplungselement angeordnet ist. Beispielsweise kann eine Rückfahrkamera in Kombination mit einer Bildverarbeitung verwendet werden, um die Position des anhängerseitigen Kupplungselements, beispielsweise in Form einer Anhängerkralle oder dergleichen, zu erkennen. Basierend auf dieser erkannten Position des anhängerseitigen Kupplungselements und in Kenntnis der relativen Positionierung der Anhängerkupplung des Kraftfahrzeugs zum anhängerseitigen Kupplungselement kann der Anhängerankuppelassistent eine Trajektorie planen, welche das Kraftfahrzeug entlang fahren muss, um die besagte Zielposition zu erreichen.

Während des Manövriervorgangs wird mittels einer Einparkhilfe ein rückwärtiger Überwachungsbereich des Kraftfahrzeugs überwacht. Die Einparkhilfe kann beispielsweise Ultraschallsensoren, Radarsensoren oder dergleichen aufweisen, um den rückwärtigen Überwachungsbereich des Kraftfahrzeugs während des Manövriervorgangs zu überwachen. Der Anhängerankuppelassistent kann den Manövriervorgang teilautonom oder auch vollautonom vornehmen. Beispielsweise ist es möglich, dass ein Fahrer des Kraftfahrzeugs lediglich das Gaspedal und die Bremse betätigen muss, wobei der Anhängerankuppelassistent sämtliche Lenkvorgänge zur Erreichung der Zielposition vollautomatisch durchführt. Alternativ ist es aber auch möglich, dass der Anhängerankuppelassistent den gesamten Manövriervorgang vollautomatisch durchführt. Dabei kann der Fahrer beispielsweise im Kraftfahrzeug sitzen. Alternativ ist es aber auch möglich, dass ein Benutzer das Kraftfahrzeug und somit den Anhängerankuppelassistenten beispielsweise mit seinem Smartphone fernsteuern kann, wobei der Anhängerankuppelassistent den Manövriervorgang solange vollautomatisch bis zum Erreichen der Zielposition durchführt, solange erfasst wird, dass der Benutzer beispielsweise seinen Finger auf eine bestimmte mechanische oder nur angezeigte Bedientaste des Smartphones gelegt hat.

Das erfindungsgemäße Verfahren zeichnet sich dadurch aus, dass die Einparkhilfe bei deaktiviertem Anhängerankuppelassistenten in einem Standardmodus betrieben wird, wohingegen die Einparkhilfe bei aktiviertem Anhängerankuppelassistenten in einem Ankoppelmodus betrieben wird, in welchem mittels der Einparkhilfe auf den rückwärtigen Bereich bezogene Hinderniswarnungen anders als im Standardmodus ausgegeben werden. Mit anderen Worten ist es also erfindungsgemäß vorgesehen, die Einparkhilfe während des Manövriervorgangs mittels des Anhängerankuppelassistenten anders zu betreiben, als es standardmäßig beim reinen Rückwärtsfahren oder ganz allgemein beim Rangieren mit aktivierter Einparkhilfe der Fall wäre.

Der Erfindung liegt dabei die Erkenntnis zugrunde dass es bei einer rein herkömmlichen Betriebsweise der Einparkhilfe bei gleichzeitig aktiviertem Anhängerankuppelassistenten zu widersprüchlichen Hinderniswarnungen für einen Benutzer des Kraftfahrzeugs kommen kann. Würde nämlich die Einparkhilfe sowohl bei aktivierten als auch bei deaktivierten Anhängerankuppelassistenten im besagten Standardmodus betrieben werden, könnte es beispielsweise vorkommen, dass beim Rückwärtsmanövrieren des Kraftfahrzeugs an den Anhänger heran bei Unterschreiten eines bestimmten Abstands zum Anhänger, insbesondere zum anhängerseitigen Kupplungselement, ein Dauerwarnton ausgegeben wird. Dies stellt üblicherweise die höchste Warnstufe bei gängigen Einparkhilfen dar und bedeutet dem Fahrer, dass er nicht mehr weiterfahren sollte. Handelt es sich jedoch bei dem erkannten Hindernis um das anhängerseitige Kupplungselement, so muss der Fahrer jedoch trotz des Dauerwarntons weiterfahren, da er die besagte Zielposition noch nicht erreicht hat, in welcher die Anhängerkupplung des Kraftfahrzeugs in der vorgegebenen Ankoppelstellung zum anhängerseitigen Kupplungselement angeordnet ist. Trotz der höchsten Warnstufe müsste der Fahrer also weiterfahren, da ab Ertönen des Dauerwarntons die besagte Zielposition beispielsweise noch 10 bis 15 Zentimeter entfernt ist.

Genau diese Problematik greift die erfindungsgemäßen Lösung auf. Denn dadurch, dass die Einparkhilfe bei aktiviertem Anhängerankuppelassistenten im besagten Ankoppelmodus betrieben wird, in welchem mittels der Einparkhilfe auf den rückwärtigen Bereich bezogene Hinderniswarnungen anders als im Standardmodus ausgegeben werden, können beim Heranmanövrieren des Kraftfahrzeugs mittels des Anhängerankuppelassistenten widerspruchsfreie Hinderniswarnungen ausgegeben werden. Beim Heranmanövrieren an den Anhänger gibt die Einparkhilfe also andere Hinderniswarnungen aus, als es diese beispielsweise beim reinen Rückwärtsfahren tun würde, beispielsweise wenn sich das Kraftfahrzeug einer Wand oder dergleichen nähert.

Das wird dadurch erzielt, dass der Einparkhilfe mitgeteilt wird, ob der Anhängerankuppelassistent gerade aktiv ist oder nicht, insbesondere ob der Anhängerankuppelassistent gerade das Kraftfahrzeug zumindest teilautonom in Richtung der Zielposition manövriert. Eine Warnstrategie der Einparkhilfe kann somit an den aktivierten Anhängerankuppelassistenten angepasst werden, sodass ein Fahrer beziehungsweise Benutzer des Kraftfahrzeugs während des Manövriervorgangs in die Zielposition nicht durch gegebenenfalls widersprüchliche Hinderniswarnungen von der Einparkhilfe irritiert wird. Denn während des Ankoppelvorgangs an den Anhänger ist es gerade erforderlich, dass das Kraftfahrzeug einen üblichen Minimalabstand, ab welchem eine höchste Warnstufe der Einparkhilfe im Standmodus erreicht wird, zum anhängerseitigen Kupplungselement unterschreitet.

Die Erfindung sieht zudem vor, dass im Ankoppelmodus die Position des anhängerseitigen Kupplungselements an die Einparkhilfe übermittelt wird, wobei, wenn sich ein Objekt im rückwärtigen Überwachungsbereich und innerhalb eines vorgegebenen Umkreises um die Position des anhängerseitigen Kupplungselements befindet, die Einparkhilfe eine Ausgabe einer Hinderniswarnung unterlässt, welche im Standardmodus ansonsten ausgegeben werden würde. Mit anderen Worten ist also eine Art Ausmaskierung des anhängerseitigen Ankupplungselements vorgesehen. Die Einparkhilfe kann in Kenntnis der Position des anhängerseitigen Ankupplungselements die Ausgabe von Hinderniswarnungen anpassen. Werden in der Nähe des anhängerseitigen Ankupplungselements Objekte erkannt, auf welche die Einparkhilfe üblicherweise mit Hinderniswarnungen reagieren würde, wird die Warnstrategie der Einparkhilfe im Ankoppelmodus derart angepasst, dass keine auf diese Objekte bezogenen Hinderniswarnungen ausgegeben werden. Der Fahrer des Kraftfahrzeugs beziehungsweise der Benutzer des Kraftfahrzeugs wird also während des Manövriervorgangs mittels des Anhängerankuppelassistenten in Richtung der Zielposition nicht durch die Einparkhilfe irritiert, da diese insbesondere die Annäherung an das anhängerseitige Kupplungselement insofern ignoriert, dass diesbezüglich keine Hinderniswarnungen ausgegeben werden.

Eine vorteilhafte Ausführungsform der Erfindung sieht vor, dass, wenn sich ein Objekt im rückwärtigen Überwachungsbereich und innerhalb des vorgegebenen Umkreises um die Position des anhängerseitigen Kupplungselements befindet, die Einparkhilfe die Ausgabe einer akustischen Hinderniswarnung, insbesondere eines Dauerwarntons, unterlässt, welche im Standardmodus ansonsten ausgegeben werden würde. Alternativ oder zusätzlich ist es vorgesehen, dass, wenn sich ein Objekt im rückwärtigen Überwachungsbereich und innerhalb des vorgegebenen Umkreises um die Position des anhängerseitigen Kupplungselements befindet, die Einparkhilfe das Anzeigen einer optischen Hinderniswarnung unterlässt, insbesondere in gelben und/oder roten Signalfarben, welche im Standardmodus ansonsten angezeigt werden würde. Unterschreitet das Kraftfahrzeug beispielsweise mit einer hinteren Stoßstange einen Abstand zum anhängerseitigen Kupplungselement von 30 Zentimetern, könnte es im Standardmodus der Einparkhilfe vorgesehen sein, dass diese sowohl einen Dauerton ausgibt als auch beispielsweise in einem fahrzeugseitigen Display entsprechend rote Warnbalken anzeigt. Im Ankoppelmodus der Einparkhilfe, also bei aktiviertem Anhängerankuppelassistenten hingegen, werden derartige Hinderniswarnungen, welche auf eine Unterschreitung eines bestimmten Abstands zum anhängerseitigen Kupplungselement bezogen sind, unterlassen. Ein Fahrer beziehungsweise Benutzer des Kraftfahrzeugs wird also während des zumindest teilautonomen Manövriervorgangs des Kraftfahrzeugs zur Zielposition nicht durch akustische und/oder optische Hinderniswarnungen irritiert, welche auf eine Unterschreitung eines bestimmten Abstands zum anhängerseitigen Kupplungselement bezogen sind.

In weiterer vorteilhafter Ausgestaltung der Erfindung ist es vorgesehen, dass die Hinderniswarnung im Kraftfahrzeug und bei einem mittels einer Fernbedienung ferngesteuerten Manövriervorgang die Hinderniswarnung mittels der Fernbedienung ausgegeben wird. Beispielsweise ist es möglich, dass ein Benutzer des Kraftfahrzeugs den Ankoppelvorgang über sein Smartphone fernsteuern kann. In dem Fall werden die vorstehend beschriebenen Hinderniswarnungen vorzugsweise auch mittels des Smartphones ausgegeben, wobei auch in diesem Fall die Einparkhilfe bei aktiviertem Anhängerankuppelassistenten im besagten Ankoppelmodus betrieben wird, in welchem mittels der Einparkhilfe auf den rückwärtigen Bereich bezogene Hinderniswarnungen anders als im Standardmodus ausgegeben werden. So wird auch bei einer Fernbedienung des Kraftfahrzeugs mittels des Smartphones die akustische und/oder optische Hinderniswarnung mittels der Einparkhilfe während des Manövriervorgangs in die Zielposition anders ausgegeben, als wenn beispielsweise mittels des Smartphones ein Remote-Einparkvorgang vorgenommen wird. Steht ein Fahrer beziehungsweise Benutzer des Kraftfahrzeugs also außerhalb vom Kraftfahrzeug, während das Kraftfahrzeug an den Anhänger heran rangiert wird, so wird der Benutzer auch dann durch eine angepasste Warnstrategie seitens der Einparkhilfe nicht durch widersprüchliche, über das Smartphone ausgegebene Hinderniswarnungen irritiert.

Das erfindungsgemäße System zum Unterstützen eines Ankoppelvorgangs eines Kraftfahrzeugs an einen Anhänger umfasst einen Anhängerankuppelassistenten, welcher dazu ausgelegt ist, eine Position eines anhängerseitigen Kupplungselements zu erkennen und basierend darauf das Kraftfahrzeug zumindest teilautonom in eine Zielposition zu manövrieren, in welcher eine Anhängerkupplung des Kraftfahrzeugs in einer vorgegebenen Ankoppelstellung zum anhängerseitigen Kupplungselement angeordnet ist, wobei das System eine Einparkhilfe aufweist, welche dazu ausgelegt ist, während des Manövriervorgangs einen rückwärtigen Überwachungsbereich des Kraftfahrzeugs zu überwachen. Das System ist dabei dazu eingerichtet, die Einparkhilfe bei deaktiviertem Anhängerankuppelassistenten in einem Standardmodus und die Einparkhilfe bei aktiviertem Anhängerankuppelassistenten in einem Ankoppelmodus zu betreiben, in welchem mittels der Einparkhilfe auf den rückwärtigen Bereich bezogene Hinderniswarnungen anders als im Standardmodus ausgegeben werden. Das System ist außerdem dazu eingerichtet, im Ankoppelmodus die Position des anhängerseitigen Kupplungselements an die Einparkhilfe zu übermitteln, wobei, wenn sich ein Objekt im rückwärtigen Überwachungsbereich und innerhalb eines vorgegebenen Umkreises um die Position des anhängerseitigen Kupplungselements befindet, die Einparkhilfe dazu ausgelegt ist, eine Ausgabe einer Hinderniswarnung zu unterlassen, welche im Standardmodus ansonsten ausgegeben werden würde, indem die Annäherung an das anhängerseitige Kupplungselement insofern ignoriert wird, dass diesbezüglich keine Hinderniswarnungen ausgegeben werden. Vorteilhafte Ausgestaltungen des erfindungsgemäßen Verfahrens sind als vorteilhafte Ausgestaltungen des erfindungsgemäßen Systems und umgekehrt anzusehen, wobei das System insbesondere Mittel zur Durchführung der Verfahrensschritte aufweist.

Das erfindungsgemäße Kraftfahrzeug umfasst das erfindungsgemäße System oder eine vorteilhafte Ausführungsform des erfindungsgemäßen Systems zum Unterstützen eines Ankoppelvorgangs eines Kraftfahrzeugs an einen Anhänger.

Die Zeichnung zeigt in:
- Fig. 1: eine schematische Darstellung eines Ankoppelvorgangs eines Kraftfahrzeugs an einen Anhänger;
- Fig. 2: eine Darstellung eines Displays des Kraftfahrzeugs, mittels welchem während des Ankoppelvorgangs an den Anhänger optische Hinderniswarnungen ausgegeben werden; und in
- Fig. 3: eine weitere Darstellung des Displays des Kraftfahrzeugs, mittels welchem gemäß einer zweiten Variante optische Hinderniswarnungen während des Heranfahrens an den Anhänger ausgegeben werden.

In den Figuren sind gleiche oder funktionsgleiche Elemente mit den gleichen Bezugszeichen versehen worden.

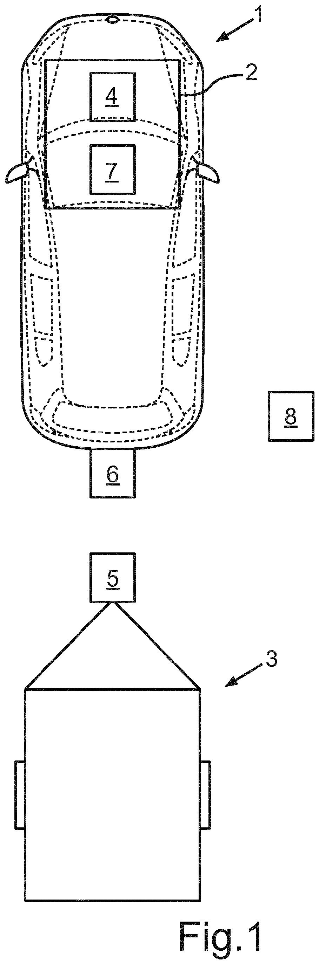

Ein Kraftfahrzeug 1, das ein System 2 zum Unterstützen eines Ankoppelvorgangs des Kraftfahrzeugs 1 an einen Anhänger 3 aufweist, ist in einer schematischen Darstellung in Fig. 1 gezeigt. Das System 2 umfasst einen Anhängerankuppelassistenten 4, welcher dazu ausgelegt ist, eine Position eines anhängerseitigen Kupplungselements 5 zu erkennen und basierend darauf das Kraftfahrzeug 1 zumindest teilautonom in eine Zielposition zu manövrieren, in welcher eine Anhängerkupplung 6 des Kraftfahrzeugs in einer vorgegebenen Ankoppelstellung zum anhängerseitigen Kupplungselement 5 angeordnet ist. Bei der Anhängerkupplung 6 des Kraftfahrzeugs 1 kann es sich beispielsweise um eine Kugelkupplung und bei dem anhängerseitigen Kupplungselement 5 beispielsweise um eine Anhängerkralle handeln. Andere Ausführungsformen des anhängerseitigen Kupplungselements 5 und der Anhängerkupplung 6 des Kraftfahrzeugs 1 sind ebenfalls möglich.

Das System 2 umfasst zudem noch eine Einparkhilfe 7, welche dazu ausgelegt ist, während des Manövriervorgangs einen rückwärtigen, hier nicht dargestellten Überwachungsbereich B des Kraftfahrzeugs 1 zu überwachen. Das System 2 ist dabei dazu eingerichtet, die Einparkhilfe 7 bei deaktiviertem Anhängerankuppelassistenten 4 in einem Standardmodus zu betreiben und die Einparkhilfe 7 bei aktiviertem Anhängerankuppelassistenten 4 in einem Ankoppelmodus zu betreiben, in welchem mittels der Einparkhilfe 7 auf den rückwärtigen Bereich B bezogene Hinderniswarnungen anders als im Standardmodus ausgegeben werden.

Der Anhängerankuppelassistent 4 kann beispielsweise mit einer hier nicht dargestellten Rückfahrkamera gekoppelt sein, wobei der Anhängerankuppelassistent 4 selbst beispielsweise eine Bildverarbeitung vornehmen kann, um das anhängerseitige Kupplungselement 5 zu erkennen. Basierend auf dem erkannten anhängerseitigen Kupplungselement 5 kann der Anhängerankuppelassistent 4 beispielsweise die Position des anhängerseitigen Kupplungselements 5 bestimmen und basierend darauf das Kraftfahrzeug 1 teilautonom oder vollautonom in die besagte Zielposition manövrieren, in welcher die Anhängerkupplung 6 des Kraftfahrzeugs 1 in einer vorgegebenen Ankoppelstellung zum anhängerseitigen Kupplungselement 5 angeordnet ist.

In der Zielposition kann es beispielsweise vorgesehen sein, dass die Anhängerkupplung 6 des Kraftfahrzeugs 1 in einer bestimmten Position unterhalb von dem anhängerseitigen Kupplungselement 5 angeordnet sein muss. Ist diese Zielposition erreicht, so kann der Anhänger 3 ganz einfach an das Kraftfahrzeug 1 angekoppelt werden, beispielsweise indem eine hier nicht näher bezeichnete Deichsel des Anhängers 3 mitsamt dem anhängerseitigen Kupplungselement 5 soweit abgesenkt wird, bis das anhängerseitige Kupplungselement 5 die Anhängerkupplung 6 des Kraftfahrzeugs 1 umschließt.

Die Einparkhilfe 7 kann beispielsweise rund ums Kraftfahrzeug 1 verteilt mehrere hier nicht dargestellte Sensoren, beispielsweise in Form von Ultraschallsensoren, Radarsensoren und/oder dergleichen aufweisen, mittels welchen unterschiedlichste Objekte in der Nähe des Kraftfahrzeugs 1 detektiert werden können. Um einen Fahrer beziehungsweise Benutzer des Kraftfahrzeugs 1 während des Manövriervorgangs in die besagte Zielposition nicht zu irritieren, ist es vorgesehen, die Einparkhilfe bei deaktiviertem Anhängerankuppelassistenten anders zu betreiben als bei aktiviertem Anhängerankuppelassistenten. In letzterem Fall wird die Einparkhilfe 7 im besagten Ankoppelmodus betrieben, in welchem mittels der Einparkhilfe 7 auf den rückwärtigen Bereich B bezogene Hinderniswarnungen anders als im Standardmodus ausgegeben werden.

Der Anhängerankuppelassistent 4 ist dabei nicht nur darauf beschränkt, bei im Kraftfahrzeug 1 sitzendem Fahrer den besagten Manövriervorgang in die Zielposition vorzunehmen. Alternativ oder zusätzlich kann es auch vorgesehen sein, dass ein Benutzer beziehungsweise Fahrer des Kraftfahrzeugs 1 mit seinem Smartphone 8 den Anhängerankuppelassistenten 4 aktivieren kann, sodass der Anhängerankuppelassistent 4 vollautomatisch den Manövriervorgang vornimmt, sodass das Kraftfahrzeug 1 die besagte Zielposition vollautonom anfährt, in welcher die Anhängerkupplung 6 des Kraftfahrzeugs 1 in der vorgegebenen Ankoppelstellung zum anhängerseitigen Kupplungselement 5 angeordnet ist. Bei der Steuerung mittels des Smartphones 8 kann es vorgesehen sein, dass Warnhinweise beziehungsweise Hinderniswarnungen von der Einparkhilfe 7 an das Smartphone 8 übertragen und mittels diesem optisch und akustisch ausgegeben werden. Auch in diesem Fall ist es vorgesehen, dass die Einparkhilfe 7 bei deaktiviertem Anhängerankuppelassistenten 4 anders betrieben wird als bei aktiviertem Anhängerankuppelassistenten 4, nämlich im letzteren Fall im besagten Ankoppelmodus.

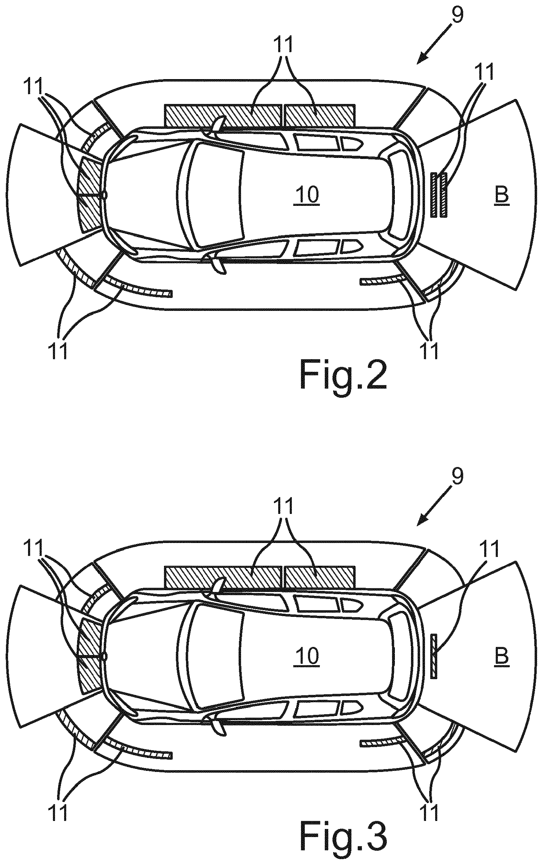

In Fig. 2 ist ein Display 9 des Kraftfahrzeugs 1 dargestellt, mittels welchem ein Abbild 10 des Kraftfahrzeugs 1 angezeigt wird. Das Display 9 kann beispielsweise im Bereich einer Mittelkonsole des Kraftfahrzeugs 1 angeordnet sein. Während des Manövrier- beziehungsweise Rangiervorgangs in Richtung des Anhängers 3 zeigt das Display 9, angesteuert durch die Einparkhilfe 7, unterschiedliche optische Warnhinweise in Form jeweiliger Warnbalken 11 an. In an sich bekannter Weise kann es beim normalen Rangieren mit dem Kraftfahrzeug 1 vorgesehen sein, dass die Warnbalken 11 in unterschiedlichen Farben, von grün über gelb bis hin zu rot dargestellt werden, je nachdem wie groß jeweilige Abstände zwischen Objekten im Umfeld des Kraftfahrzeugs 1 und dem Kraftfahrzeug 1 sind.

Bei der hier gezeigten Ausführungsform ist es vorgesehen, dass im Ankoppelmodus die Position des anhängerseitigen Kupplungselements 5 an die Einparkhilfe 7 übermittelt wird, wobei, wenn sich ein Objekt im rückwärtigen Überwachungsbereich B und innerhalb eines vorgegebenen Umkreises um die Position des anhängerseitigen Kupplungselements 5 befindet, die Einparkhilfe 7 eine Ausgabe einer Hinderniswarnung unterlässt, welche im Standardmodus ansonsten ausgegeben werden würde.

Beispielsweise könnte es im Standardmodus vorgesehen sein, dass die Einparkhilfe 7 beim Rückwärtsfahren bei Unterschreiten eines bestimmten Abstands zu einem bestimmten Objekt die Warnbalken 11 im Heckbereich des Abbilds 10 des Kraftfahrzeugs zum Beispiel in rot anzeigen würde. Ist der Anhängerankuppelassistent 4 jedoch aktiv, so ist es vorgesehen, dass die Einparkhilfe 7 insbesondere das Eintauchen des anhängerseitigen Kupplungselements 5 in den Überwachungsbereich B quasi ignoriert. Unterschreitet beispielsweise eine Stoßstange des Kraftfahrzeugs 1 einen Abstand von 30 Zentimetern zum anhängerseitigen Kupplungselement 5, wird dennoch mittels der Einparkhilfe 7, welche im Ankoppelmodus betrieben wird, weder ein optischer noch ein akustischer Warnhinweis ausgegeben. Wenn sich also ein Objekt im rückwärtigen Überwachungsbereich B und innerhalb des vorgegebenen Umkreises um die Position des anhängerseitigen Kupplungselements 5 befindet, unterlässt die Einparkhilfe 7 sowohl die Ausgabe einer akustischen als auch einer optischen Hinderniswarnung, welche im Standardmodus ansonsten ausgegeben werden würde. Es ertönt also weder ein Dauerwarnton noch das Anzeigen von Warnbalken 11 im Heckbereich des Abbilds des Kraftfahrzeugs 1 mittels des Displays 9. Ein bestimmter Bereich rund um das anhängerseitige Kupplungselement 5 wird also mittels der Einparkhilfe 7 maskiert beziehungsweise ignoriert, solange der Anhängerankuppelassistent 4 aktiv ist, insbesondere wenn dieser das Kraftfahrzeug 1 in die besagte Zielposition teilautomatisch oder vollautomatisch rangiert.

In Fig. 3 ist das Display 9 des Kraftfahrzeugs 1 erneut dargestellt, wobei es im hier gezeigten Fall vorgesehen ist, dass im Ankoppelmodus der Einparkhilfe 7 die Position des anhängerseitigen Kupplungselements 5 an die Einparkhilfe 7 übermittelt und ein unterer Abstandswert zu einem Objekt, ab welchem im Standardmodus bei der Einparkhilfe 7 eine höchste Warnstufe erreicht ist, bezogen auf das anhängerseitige Kupplungselement 5 so sehr verringert wird, dass die höchste Warnstufe im Ankoppelmodus erst dann erreicht wird, wenn das Kraftfahrzeug 1 die Zielposition erreicht hat.

Dabei kann es vorgesehen sein, dass mit sich verringerndem Abstand zur Position des anhängerseitigen Kupplungselements 5 Pausen zwischen einer ausgegebenen akustischen Hinderniswarnung verringert werden, wobei die akustische Hinderniswarnung als Dauerwarnton ausgegeben wird, sobald das Kraftfahrzeug die Zielposition erreicht hat. Im Gegensatz dazu würde die Einparkhilfe 7 im Standardmodus diesen Dauerwarnton beispielsweise schon dann ausgeben, wenn zwischen einer hinteren Stoßstange des Kraftfahrzeugs 1 und einem im rückwärtigen Überwachungsbereich B angeordneten Objekt ein Abstand von beispielsweise 30 Zentimetern unterschritten worden wäre.

Zudem kann es auch noch vorgesehen sein, dass mit sich verringerndem Abstand zur Position des anhängerseitigen Kupplungselements 5 eine optische Hinderniswarnung, beispielsweise in Form des Warnbalkens 11 im Heckbereich des Abbilds 10 des Kraftfahrzeugs 1 mittels des Displays 9 zunächst in grün, dann in gelb und schließlich in rot angezeigt wird, sobald das Kraftfahrzeug 1 die Zielposition erreicht hat. Bei dem im Zusammenhang mit Fig. 3 beschriebenen Ausführungsbeispiel ist es also mit anderen Worten vorgesehen, eine Schwelle zur höchsten akustischen als auch optischen Warnstufe auf die Zielposition des Kraftfahrzeugs 1 zu verschieben, in welcher die Anhängerkupplung 6 des Kraftfahrzeugs 1 in der vorgegebenen Ankoppelstellung zum anhängerseitigen Kupplungselement 5 angeordnet ist. Bei Erreichen der Zielposition ertönt ein Dauerton, da erst dann die höchste Warnstufe erreicht wird. Gleiches gilt auch für die optische Darstellung. So wird der Warnbalken 11 im Heckbereich des Abbilds 10 des Kraftfahrzeugs 1 mittels des Displays 9 in rot angezeigt, wenn das Kraftfahrzeug 1 in die Zielposition manövriert worden ist, in der die Anhängerkupplung 6 des Kraftfahrzeugs 1 in der vorgegebenen Ankoppelstellung zum anhängerseitigen Kupplungselement 5 angeordnet ist.

Mittels beider im Zusammenhang mit den Fig. 2 und 3 beschriebenen Vorgehensweisen kann sichergestellt werden, dass ein Benutzer beziehungsweise Fahrer des Kraftfahrzeugs 1 während eines zumindest teilautonomen Ankoppelvorgangs an den Anhänger 3 nicht durch widersprüchliche Warnhinweise mittels der Einparkhilfe 7 irritiert wird.

### Bezugszeichenliste

- 1: Kraftfahrzeug
- 2: System
- 3: Anhänger
- 4: Anhängerankuppelassistent
- 5: anhängerseitiges Kupplungselement
- 6: Anhängerkupplung des Kraftfahrzeugs
- 7: Einparkhilfe
- 8: Smartphone
- 9: Display des Kraftfahrzeugs
- 10: Abbild des Kraftfahrzeugs
- 11: Warnbalken
- B: rückwärtiger Überwachungsbereich

## Patentansprüche

1. Verfahren zum Unterstützen eines Ankoppelvorgangs eines Kraftfahrzeugs (1) an einen Anhänger (3), bei welchem mittels eines Anhängerankuppelassistenten (4) eine Position eines anhängerseitigen Kupplungselements (5) erkannt und basierend darauf das Kraftfahrzeug (1) zumindest teilautonom in eine Zielposition manövriert wird, in welcher eine Anhängerkupplung (6) des Kraftfahrzeugs (1) in einer vorgegebenen Ankoppelstellung zum anhängerseitigen Kupplungselement (5) angeordnet ist, wobei während des Manövriervorgangs mittels einer Einparkhilfe (7) ein rückwärtiger Überwachungsbereich (B) des Kraftfahrzeugs (1) überwacht wird, wobei
- die Einparkhilfe (7) bei deaktiviertem Anhängerankuppelassistenten (4) in einem Standardmodus betrieben wird;
- die Einparkhilfe (7) bei aktiviertem Anhängerankuppelassistenten (4) in einem Ankoppelmodus betrieben wird, in welchem mittels der Einparkhilfe (7) auf den rückwärtigen Bereich (B) bezogene Hinderniswarnungen anders als im Standardmodus ausgegeben werden;
wobei im Ankoppelmodus die Position des anhängerseitigen Kupplungselements (5) an die Einparkhilfe (7) übermittelt wird,
**dadurch gekennzeichnet, dass**
dann, wenn sich ein Objekt im rückwärtigen Überwachungsbereich (B) und innerhalb eines vorgegebenen Umkreises um die Position des anhängerseitigen Kupplungselements (5) befindet, die Einparkhilfe (7) eine Ausgabe einer Hinderniswarnung unterlässt, welche im Standardmodus ansonsten ausgegeben werden würde, indem die Annäherung an das anhängerseitige Kupplungselement (5) insofern ignoriert wird, dass diesbezüglich keine Hinderniswarnungen ausgegeben werden.

2. Verfahren nach Anspruch 1,
**dadurch gekennzeichnet, dass**,
wenn sich ein Objekt im rückwärtigen Überwachungsbereich (B) und innerhalb des vorgegebenen Umkreises um die Position des anhängerseitigen Kupplungselements (5) befindet, die Einparkhilfe (7) die Ausgabe einer akustischen Hinderniswarnung, insbesondere eines Dauerwarntons, unterlässt, welche im Standardmodus ansonsten ausgegeben werden würde.

3. Verfahren nach Anspruch 1 oder 2,
**dadurch gekennzeichnet, dass**,
wenn sich ein Objekt im rückwärtigen Überwachungsbereich (B) und innerhalb des vorgegebenen Umkreises um die Position des anhängerseitigen Kupplungselements (5) befindet, die Einparkhilfe (7) das Anzeigen einer optischen Hinderniswarnung (11) unterlässt, insbesondere in gelben und/oder roten Signalfarben, welche im Standardmodus ansonsten angezeigt werden würde.

4. Verfahren nach einem der vorhergehenden Ansprüche,
**dadurch gekennzeichnet, dass**
die Hinderniswarnung im Kraftfahrzeug (1) und bei einem mittels einer Fernbedienung (8) ferngesteuerten Manövriervorgang die Hinderniswarnung mittels der Fernbedienung (8) ausgegeben wird.

5. System (2) zum Unterstützen eines Ankoppelvorgangs eines Kraftfahrzeugs (1) an einen Anhänger (3), umfassend einen Anhängerankuppelassistenten (4), welcher dazu ausgelegt ist, eine Position eines anhängerseitigen Kupplungselements (5) zu erkennen und basierend darauf das Kraftfahrzeug (1) zumindest teilautonom in eine Zielposition zu manövrieren, in welcher eine Anhängerkupplung (6) des Kraftfahrzeugs (1) in einer vorgegebenen Ankoppelstellung zum anhängerseitigen Kupplungselement (5) angeordnet ist, wobei das System (2) eine Einparkhilfe (7) aufweist, welche dazu ausgelegt ist, während des Manövriervorgangs einen rückwärtigen Überwachungsbereich (B) des Kraftfahrzeugs (1) zu überwachen, wobei
das System dazu eingerichtet ist,
- die Einparkhilfe (7) bei deaktiviertem Anhängerankuppelassistenten (4) in einem Standardmodus zu betreiben;
- die Einparkhilfe (7) bei aktiviertem Anhängerankuppelassistenten (4) in einem Ankoppelmodus zu betreiben, in welchem mittels der Einparkhilfe (7) auf den rückwärtigen Bereich (B) bezogene Hinderniswarnungen anders als im Standardmodus ausgegeben werden;
• im Ankoppelmodus die Position des anhängerseitigen Kupplungselements (5) an die Einparkhilfe (7) zu übermitteln,
**dadurch gekennzeichnet, dass**
das System weiterhin eingerichtet ist, dann, wenn sich ein Objekt im rückwärtigen Überwachungsbereich (B) und innerhalb eines vorgegebenen Umkreises um die Position des anhängerseitigen Kupplungselements (5) befindet, die Einparkhilfe (7) dazu ausgelegt ist, eine Ausgabe einer Hinderniswarnung zu unterlassen, welche im Standardmodus ansonsten ausgegeben werden würde, indem die Annäherung an das anhängerseitige Kupplungselement (5) insofern ignoriert wird, dass diesbezüglich keine Hinderniswarnungen ausgegeben werden.

6. Kraftfahrzeug (1) mit einem System nach Anspruch 5.

## Claims

1. Method for supporting a process of coupling a motor vehicle (1) to a trailer (3), in which a position of a coupling element (5) on the trailer is detected by means of a trailer coupling assistant (4) and based on this the motor vehicle (1) is at least partly autonomously manoeuvred into a target position in which a trailer coupling (6) of the motor vehicle (1) is disposed in a specified position for coupling to the coupling element (5) on the trailer, wherein a rearward monitoring region (B) of the motor vehicle (1) is monitored during the manoeuvring process by means of a parking aid (7), wherein
- the parking aid (7) is operated in a standard mode when the trailer coupling assistant (4) is deactivated;
- when the trailer coupling assistant (4) is activated the parking aid (7) is operated in a coupling mode in which obstacle warnings relating to the rearward region (B) are output by means of the parking aid (7) differently from in the standard mode;
wherein the position of the coupling element (5) on the trailer is transmitted to the parking aid (7) in the coupling mode,
**characterized in that**
if an object is disposed in the rearward monitoring region (B) and within a specified perimeter around the position of the coupling element (5) on the trailer, the parking aid (7) does not output an obstacle warning that would otherwise be output in the standard mode by ignoring the approach to the coupling element (5) on the trailer if no obstacle warnings are output in this regard.

2. Method according to Claim 1,
**characterized in that**
if an object is disposed in the rearward monitoring region (B) and within the specified perimeter around the position of the coupling element (5) on the trailer, the parking aid (7) does not output an audible obstacle warning, in particular a continuous warning tone, that would otherwise be output in the standard mode.

3. Method according to Claim 1 or 2,
**characterized in that**
if an object is disposed in the rearward monitoring region (B) and within the specified perimeter around the position of the coupling element (5) on the trailer, the parking aid (7) does not display a visible obstacle warning (11), in particular in yellow and/or red signal colours, which would otherwise be displayed in the standard mode.

4. Method according to one of the preceding claims,
**characterized in that**
the obstacle warning is output in the motor vehicle (1) and in the case of a manoeuvring process that is remotely controlled by means of a remote controller (8) the obstacle warning is output by means of the remote controller (8).

5. System (2) for supporting a process of coupling a motor vehicle (1) to a trailer (3), comprising a trailer coupling assistant (4) that is designed to detect a position of a coupling element (5) on the trailer and based on this to manoeuvre the motor vehicle (1) at least partly autonomously into a target position in which a trailer coupling (6) of the motor vehicle (1) is disposed in a specified position for coupling to the coupling element (5) on the trailer, wherein the system (2) comprises a parking aid (7) that is designed to monitor a rearward monitoring region (B) of the motor vehicle (1) during the manoeuvring process, wherein
the system is configured to
- operate the parking aid (7) in a standard mode when the trailer coupling assistant (4) is deactivated;
- when the trailer coupling assistant (4) is activated, to operate the parking aid (7) in a coupling mode in which obstacle warnings relating to the rearward region (B) are output by means of the parking aid (7) differently from in the standard mode;
- transmit the position of the coupling element (5) on the trailer to the parking aid (7) in the coupling mode,
**characterized in that**
the system is also configured so that, if an object is disposed in the rearward monitoring region (B) and within a specified perimeter around the position of the coupling element (5) on the trailer, the parking aid (7) is designed not to output an obstacle warning that would otherwise be output in the standard mode by ignoring the approach to the coupling element (5) on the trailer if no obstacle warnings are output in this regard.

6. Motor vehicle (1) having a system according to Claim 5.

## Revendications

1. Procédé pour assister une opération d'attelage d'un véhicule automobile (1) à une remorque (3), dans lequel une position d'un élément d'attelage (5) côté remorque est détectée au moyen d'un assistant (4) d'attelage de remorque et, sur cette base, le véhicule automobile (1) est manoeuvré de manière au moins partiellement autonome dans une position cible, dans laquelle un attelage de remorque (6) du véhicule automobile (1) est disposé dans une position de liaison prédéfinie par rapport à l'élément d'attelage (5) côté remorque, une zone de surveillance (B) arrière du véhicule automobile (1) étant surveillée pendant le processus de manoeuvre au moyen d'une aide au stationnement (7), dans lequel
- l'aide au stationnement (7) fonctionne dans un mode standard lorsque l'assistant (4) d'attelage de remorque est désactivé ;
- l'aide au stationnement (7) fonctionne dans un mode d'attelage lorsque l'assistance à l'attelage de la remorque (4) est activée, dans lequel des avertissements d'obstacles relatifs à la zone arrière (B) sont émis au moyen de l'aide au stationnement (7) différemment qu'en mode standard ;
la position de l'élément d'attelage (5) côté remorque étant transmise à l'aide au stationnement (7) en mode d'attelage,
**caractérisé en ce que**
si un objet se trouve dans la zone de surveillance arrière (B) et à l'intérieur d'un périmètre prédéterminé autour de la position de l'élément d'attelage (5) côté remorque, l'aide au stationnement (7) s'abstient d'émettre un avertissement d'obstacle qui serait sinon émis en mode standard, en ignorant l'approche de l'élément d'attelage (5) côté remorque, aucun avertissement d'obstacle n'étant émis à cet égard.

2. Procédé selon la revendication 1,
**caractérisé en ce que**,
lorsqu'un objet se trouve dans la zone de surveillance arrière (B) et dans le périmètre prédéfini autour de la position de l'élément d'attelage (5) côté remorque, l'aide au stationnement (7) s'abstient d'émettre un avertissement sonore d'obstacle, en particulier un signal sonore continu, qui serait sinon émis en mode standard.

3. Procédé selon la revendication 1 ou 2,
**caractérisé en ce que**,
lorsqu'un objet se trouve dans la zone de surveillance arrière (B) et dans le périmètre prédéfini autour de la position de l'élément d'attelage (5) côté remorque, l'aide au stationnement (7) s'abstient d'afficher un avertissement d'obstacle visuel (11), en particulier par des couleurs de signalisation jaunes et/ou rouges, qui serait sinon affiché en mode standard.

4. Procédé selon l'une des revendications précédentes,
**caractérisé en ce que**
l'avertissement d'obstacle est émis dans le véhicule automobile (1) et, lors d'une manoeuvre commandée à distance au moyen d'une télécommande (8), l'avertissement d'obstacle est émis au moyen de la télécommande (8).

5. Système (2) pour assister une opération d'attelage d'un véhicule automobile (1) à une remorque (3), comprenant un assistant (4) d'attelage de remorque qui est conçu pour reconnaître une position d'un élément d'attelage (5) côté remorque et, sur cette base, pour manoeuvrer le véhicule automobile (1) de manière au moins partiellement autonome dans une position cible, dans laquelle un attelage de remorque (6) du véhicule automobile (1) est disposé dans une position de liaison prédéfinie par rapport à l'élément d'attelage (5) côté remorque, le système (2) présentant une aide au stationnement (7) qui est conçue pour surveiller une zone de surveillance arrière (B) du véhicule automobile (1) pendant le processus de manoeuvre, dans lequel le système est conçu de manière,
- à faire fonctionner l'aide au stationnement (7) dans un mode standard lorsque l'assistant (4) d'attelage de remorque est désactivé ;
- à faire fonctionner l'aide au stationnement (7), lorsque l'assistance à l'attelage de la remorque (4) est activée, dans un mode d'attelage dans lequel des avertissements d'obstacles se rapportant à la zone arrière (B) sont émis au moyen de l'aide au stationnement (7) autrement que dans le mode standard ;
• transmettre la position de l'élément d'attelage (5) côté remorque à l'aide au stationnement (7) en mode d'attelage,
**caractérisé en ce que**
le système est en outre agencé, lorsqu'un objet se trouve dans la zone de surveillance arrière (B) et à l'intérieur d'un périmètre prédéterminé autour de la position de l'élément d'attelage (5) côté remorque, de façon que l'aide au stationnement (7) ne délivre pas un avertissement d'obstacle qui serait sinon délivré en mode standard, en ignorant l'approche de l'élément d'attelage (5) côté remorque, aucun avertissement d'obstacle n'étant délivré à cet égard.

6. Véhicule automobile (1) avec un système selon la revendication 5.
